# EUROPÄISCHE PATENTSCHRIFT

(11) **EP 3 114 332 B1**
(45) Veröffentlichungstag und Bekanntmachung des Hinweises auf die Patenterteilung: **29.08.2018**
(21) Anmeldenummer: 15701475.4
(22) Anmeldetag: 27.01.2015
(51) Int. Cl.: F01N 3/023, F01N 3/025, F01N 9/00, F01N 11/00, F02D 41/02

(54) **VERFAHREN ZUR REGENERATION EINES PARTIKELFILTERS IM BETRIEB EINER BRENNKRAFTMASCHINE**
METHOD FOR THE REGENERATION OF A PARTICULATE FILTER DURING THE OPERATION OF AN INTERNAL COMBUSTION ENGINE
PROCÉDÉ POUR LA RÉGÉNÉRATION D'UN FILTRE À PARTICULES PENDANT L'OPÉRATION D'UN MOTEUR À COMBUSTION INTERNE

(30) Priorität: 25.02.2014 DE 102014203408
(43) Veröffentlichungstag der Anmeldung: 11.01.2017
(73) Patentinhaber: MTU FRIEDRICHSHAFEN GMBH, 88045 Friedrichshafen (DE)
(72) Erfinder: MÜLLER, Ralf, 88693 Deggenhausertal (DE)
(74) Vertreter: Gleiss, Alf-Olav
(86) Internationale Anmeldenummer: PCT/EP2015/000149
(87) Internationale Veröffentlichungsnummer: WO 2015/128053

(56) Entgegenhaltungen:
- WO-A1-2012/094646
- WO-A1-2013/135717
- JP-A- 2005 233 156
- US-A1- 2011 088 374

## Beschreibung

Die Erfindung betrifft ein Verfahren zur Regeneration eines Partikelfilters im Betrieb einer Brennkraftmaschine gemäß Anspruch 1, ein Steuergerät für eine Brennkraftmaschine gemäß Anspruch 8, eine Brennkraftmaschine gemäß Anspruch 9, und ein Kraftfahrzeug gemäß Anspruch 11. Bei Brennkraftmaschinen, deren Abgasnachbehandlungssystem einen Partikelfilter aufweist, besteht regelmäßig das Problem, dass dieser bei hohem Leerlauf- oder Schwachlastanteil der Brennkraftmaschine verstopfen kann, da in diesen Betriebsbereichen das Abgas der Brennkraftmaschine zu kalt ist, um in dem Partikelfilter angesammelten Ruß zu verbrennen und diesen so zu regenerieren. Typischerweise wird daher wenigstens ein Beladungsparameter erfasst, der charakteristisch ist für eine momentane Beladung des Partikelfilters, wobei in Abhängigkeit von dem Beladungsparameter wiederkehrend eine aktive Regenerationsmaßnahme durchgeführt wird. Dabei spricht der Begriff "aktive Regenerationsmaßnahme" an, dass eine Temperatur, insbesondere die Abgastemperatur, aktiv auf einen Wert angehoben wird, bei dem der angesammelte Ruß in dem Partikelfilter verbrannt und dieser damit regeneriert wird. Dies geschieht aktiv insoweit, als die Regeneration gerade nicht durch eine ohnehin aufgrund eines entsprechenden Betriebszustands der Brennkraftmaschine erhöhte Abgastemperatur erfolgt, sondern dass die Temperatur unabhängig von dem Betriebszustand der Brennkraftmaschine mit anderen geeigneten Maßnahmen angehoben wird. Die Regeneration wird insoweit wiederkehrend durchgeführt, als die Beladung des Partikelfilters nach einer erfolgten Regeneration wieder zunimmt, sodass der Partikelfilter schließlich erneut regeneriert werden muss. Entsprechend schwankt auch der wenigstens eine Beladungsparameter mit der momentanen Beladung des Partikelfilters.

Das Dokument WO 2012/094646 A1 beschreibt ein Verfahren zum Regenerieren eines Partikelfilters. Dabei wird an einem aktuellen Zeitpunkt von einem Ist-Zustand des Partikelfilters ausgegangen und anhand von GPS-Daten eine Vorhersage für die Zukunft getroffen, ob eine aktive Regeneration des Partikelfilters durchgeführt werden muss.

Auch das Dokument US 2011/0088374 A1 beschreibt ein Verfahren zum Regenerieren eines Partikelfilters. Dabei wird anhand von telemetrischen Daten die geografische Position eines Fahrzeugs bestimmt. Anhand eines geplanten Streckenverlaufs wird dann ein Zeitpunkt für die Regenerierung des Partikelfilters bestimmt, bei dem in Summe ein geringster, für die Regenerierung, zusätzlicher Kraftstoffverbrauch zu erwarten ist.

Ebenso beschreibt das Dokument JP 2005 233156 A ein Verfahren zum Regenerieren eines Partikelfilters. Wie bei den oben beschriebenen Dokumenten wird eine aktive Regeneration des Partikelfilters noch zurückgehalten, wenn der Partikelfilter mit einer festgelegten Menge an Partikeln beladen ist, bei der er zwar aktiv regeneriert werden müsste, sich aber anhand von telemetrischen Daten aus einem Streckenverlauf ein Lastzustand für die Brennkraftmaschine ergibt, der letztendlich dazu führt, dass eine passive Regeneration des Partikelfilters einsetzt.

Nachteilig an dieser Vorgehensweise ist, dass jede mögliche aktive Regenerationsmaßnahme zusätzlich zu dem normalen Betrieb den Brennstoffverbrauch der Brennkraftmaschine erhöht. Hinzu kommt, dass eine aktive Regenerationsmaßnahme dann überflüssig ist, wenn eigentlich ein Betriebszustand der Brennkraftmaschine vorliegt oder in nächster Zeit zu erwarten ist, bei dem die Abgastemperatur ausreicht, um den Partikelfilter auch ohne aktive Regenerationsmaßnahme zu regenerieren.

Der Erfindung liegt daher die Aufgabe zugrunde, ein Verfahren zu schaffen, bei welchem die genannten Nachteile nicht auftreten. Weiterhin liegt der Erfindung die Aufgabe zugrunde, ein Steuergerät, eine Brennkraftmaschine und ein Kraftfahrzeug zu schaffen, bei welchen die genannten Nachteile nicht auftreten.

Die Aufgabe wird gelöst, indem ein Verfahren mit den Merkmalen des Anspruchs 1 geschaffen wird. Dabei wird ein Zeitfenster für eine Regeneration des Partikelfilters ermittelt. Dieses gibt vorzugsweise ausgehend von einem momentanen Zeitpunkt ein Zeitintervall an, innerhalb dessen eine Regenration des Partikelfilters erfolgen soll, um einen ungestörten Betrieb der Brennkraftmaschine zu gewährleisten. Es wird eine Prognose für einen innerhalb des Zeitfensters zu erwartenden Betriebszustand oder eine Folge zu erwartender Betriebszustände der Brennkraftmaschine ermittelt. Die aktive Regenerationsmaßnahme wird zu einem Zeitpunkt, zu dem sie eigentlich durch den Beladungsparameter indiziert ist, ausgelassen, wenn die Prognose innerhalb des Zeitfensters einen Betriebszustand der Brennkraftmaschine vorhersagt, bei dem eine Regeneration des Partikelfilters ohne aktive Regenerationsmaßnahme erfolgt. Die eigentlich zu diesem Zeitpunkt durchzuführende aktive Regenerationsmaßnahme wird demnach übersprungen oder unterlassen, weil aus der Prognose zu erwarten ist, dass die Brennkraftmaschine innerhalb eines zulässigen Zeitfensters für die Regeneration des Partikelfilters einen Betriebszustand vorhersagt, bei welchem die Abgastemperatur hoch genug ist, um den in dem Partikelfilter angesammelten Ruß zu verbrennen und diesen somit zu regenerieren, ohne dass es der aktiven Regenerationsmaßnahme bedarf. Auf diese Weise wird eine an sich unnötige, aktive Regeneration vermieden, was zur Brennstoffeinsparung beiträgt.

Bei einer bevorzugten Ausführungsform des Verfahrens ist die Regeneration des Partikelfilters durch den Beladungsparameter indiziert, wenn dessen Wert einen vorherbestimmten Grenzwert überschreitet. Es ist möglich, dass mehr als ein Beladungsparameter im Rahmen des Verfahrens verwendet wird. Bevorzugt wird eine Mehrzahl von Beladungsparametern verwendet, wobei eine Regeneration des Partikelfilters bei einer bevorzugten Ausführungsform des Verfahrens dann indiziert ist, wenn wenigstens einer der Beladungsparameter einen vorherbestimmten Grenzwert überschreitet. Insoweit werden die verschiedenen Beladungsparameter vorzugsweise als Auslöser für die Regeneration des Partikelfilters verwendet.

Nach einer Regeneration des Partikelfilters - sei es durch eine aktive Regenerationsmaßnahme oder passiv, das heißt im Rahmen des normalen Betriebs der Brennkraftmaschine bei aufgrund des aktuellen Betriebszustands erhöhter Abgastemperatur, wird der Beladungsparameter bevorzugt zurückgesetzt, wenn er nicht ohnehin auf der Grundlage eines Messwerts oder Sensorsignals bestimmt wird, welches nach erfolgter Regeneration anzeigt, dass der Partikelfilter nicht mehr oder nur noch geringfügig beladen ist. Alternativ oder zusätzlich ist es möglich, dass eine Indizierungsbedingung, insbesondere der vorherbestimmte Grenzwert, nach der Regeneration angepasst, insbesondere erhöht wird. Dies ist beispielsweise dann sinnvoll, wenn als Beladungsparameter eine Gesamtlaufleistung oder Gesamtbetriebszeit der Brennkraftmaschine verwendet wird, wobei der vorherbestimmte Grenzwert nach erfolgter Regeneration auf einen nächstfolgenden Laufleistungswert oder Betriebszeitpunkt gesetzt wird, bei dem eine erneute Regeneration erfolgen soll. Eine Anpassung, insbesondere Erhöhung, ist gegebenenfalls auch für einen Differenz- oder Gegendruck am Partikelfilter sinnvoll, da diese sich im Laufe der Zeit durch Beladung des Partikelfilters mit Asche erhöhen, welche nicht durch Regeneration entfernbar ist.

Es wird auch eine Ausführungsform des Verfahrens bevorzugt, die sich dadurch auszeichnet, dass die aktive Regenerationsmaßnahme zur Regeneration des Partikelfilters eingeleitet wird, wenn sie durch den Beladungsparameter indiziert ist, und wenn außerdem die Prognose innerhalb des Zeitfensters keinen Betrieb der Brennkraftmaschine vorhersagt, bei dem eine Regeneration des Partikelfilters ohne aktive Regenerationsmaßnahme erfolgt. Dies kann auf zweierlei Weise geschehen: Zum einen ist es möglich, dass die Prognose kein zuverlässiges Ergebnis ausgibt, sodass der Betriebszustand der Brennkraftmaschine innerhalb des Zeitfensters nicht sicher vorhersagbar ist. Zum anderen ist es möglich, dass die Prognose sicher - im Sinne einer negativen Aussage - vorhersagt, dass innerhalb des Zeitfensters kein Betriebszustand vorliegen wird, bei dem auch ohne aktive Regenerationsmaßnahme eine Regeneration des Partikelfilters erfolgt. In diesen Fällen wird bevorzugt die aktive Regenerationsmaßnahme durchgeführt, um einen fehlerfreien Betrieb der Brennkraftmaschine sicherzustellen. Diese Ausgestaltung hat den Vorteil, dass der Partikelfilter in jedem Fall innerhalb des Zeitfensters regeneriert wird, wenn dies durch den Beladungsparameter indiziert ist, unabhängig davon, ob die Prognose einen aussagefähigen Wert liefert, oder ob ein Betriebszustand der Brennkraftmaschine erreicht wird, in dem eine passive Regeneration durch die erhöhte Abgastemperatur bei normalem Betrieb der Brennkraftmaschine möglich ist.

Als aktive Regenerationsmaßnahme wird bevorzugt die Abgastemperatur angehoben, vorzugsweise durch Ansaugluftdrosselung, durch geeignete Beeinflussung einer Abgasrückführrate, durch geeignete Verstellung eines Einspritzzeitpunkts und/oder einer Einspritzmenge, oder durch andere geeignete innermotorische Maßnahmen. Alternativ ist es möglich, eine aktive Regenerationsmaßnahme durch einen zusätzlichen Brenner einzuleiten, mit dem das Abgas außerhalb einer Brennkammer der Brennkraftmaschine erhitzt wird. Alternativ oder zusätzlich ist auch eine ultraspäte oder sekundäre Brennstoffeinspritzung als aktive Regenerationsmaßnahme möglich, bei welcher eine Verbrennung des derart eingespritzten Brennstoffs an einem Oxidationskatalysator erfolgt, der vorzugsweise stromaufwärts des Partikelfilters vorgesehen ist. Alternativ oder zusätzlich ist es auch möglich, das Abgas elektrisch zu heizen, um die aktive Regenerationsmaßnahme durchzuführen. Bei diesen Maßnahmen handelt es sich um einfach durchführbare, effiziente Maßnahmen zur Anhebung der Abgastemperatur und damit zur Regeneration des Partikelfilters unabhängig von einem momentanen Betriebszustand der Brennkraftmaschine.

Es wird auch eine Ausführungsform des Verfahrens bevorzugt, bei der als Beladungsparameter eine Laufzeit oder eine Laufleistung der Brennkraftmaschine - vorzugsweise in Form einer Streckenleistung, einer Anzahl Betriebsstunden oder einer kumulierten, abgegebenen physikalischen Leistung -, nämlich eine Gesamtlaufzeit oder Gesamtlaufleistung, oder eine Laufzeit oder Laufleistung seit einer letzten Regeneration des Partikelfilters, verwendet wird. In letzterem Fall wird der Beladungsparameter nach einer erfolgten Regeneration - sei sie aktiv oder passiv - zurückgesetzt. Wird dagegen eine Gesamtlaufzeit oder eine Gesamtlaufleistung betrachtet, wird bevorzugt nach erfolgter Regeneration - sei sie aktiv oder passiv - die Indizierungsbedingung oder der Grenzwert angepasst, insbesondere erhöht. Alternativ oder zusätzlich ist es möglich, dass als Beladungsparameter ein Abgasgegendruck an dem Partikelfilter, ein über dem Partikelfilter abfallender Differenzdruck und/oder eine Rußbeladung des Partikelfilters verwendet wird/werden. Es ist möglich, dass der Abgasgegendruck oder der Differenzdruck nach erfolgter Regeneration - sei sie aktiv oder passiv, den neuen Zustand des Partikelfilters anzeigen. Eine Erhöhung oder Anpassung der Indizierungsbedingung oder des Grenzwerts kann gleichwohl sinnvoll sein und durchgeführt werden, um eine zunehmende Veraschung des Partikelfilters zu berücksichtigen. Während eine gemessene Rußbeladung ohne weiteres den neuen Zustand des Partikelfilters nach erfolgter Regeneration anzeigt, wird ein Beladungsmodell zur Berechnung der Rußbeladung vorzugsweise nach jeder Regeneration - sei sie aktiv oder passiv - zurückgesetzt, um Abweichungen in dem Modell zu kompensieren.

Der Abgasgegendruck am Partikelfilter wird vorzugsweise mittels eines Drucksensors stromaufwärts des Partikelfilters erfasst. Die Rußbeladung wird vorzugsweise durch eine geeignete Messeinrichtung, insbesondere durch einen hierfür geeigneten Sensor, der auf Hochfrequenz-Messtechnik basiert, gemessen und/oder anhand eines Beladungsmodells - beispielsweise in Abhängigkeit von einem über dem Partikelfilter abfallenden Differenzdruck - berechnet. Bevorzugt findet zusätzlich oder alternativ ein Beladungsmodell Anwendung, welches die Beladung des Partikelfilters unabhängig von dem Differenz- oder Gegendruck anhand von wenigstens einem Betriebsparameter der Brennkraftmaschine, wie beispielsweise einem Abgasmassenstrom, einer Abgastemperatur, einer Rußemission und/oder einer Stickoxidkonzentration, bestimmt. Dies ist insbesondere aus Gründen der Redundanz vorteilhaft. Solche Beladungsmodelle sind für sich genommen bekannt, sodass hierauf nicht näher eingegangen wird. Der über dem Partikelfilter abfallende Differenzdruck wird vorzugsweise entweder durch einen Differenzdrucksensor oder durch zwei Drucksensoren erfasst, von denen ein erster stromaufwärts des Partikelfilters und ein zweiter stromabwärts des Partikelfilters angeordnet wird.

Es wird auch eine Ausführungsform des Verfahrens bevorzugt, die sich dadurch auszeichnet, dass das Zeitfenster ermittelt wird, in dem eine Rußbeladungsrate des Partikelfilters ermittelt wird. Als Zeitfenster wird die Zeit ermittelt, die bis zum Erreichen einer vorherbestimmten, kritischen Rußbeladung bei der ermittelten Rußbeladungsrate noch vergeht. Die Rußbeladungsrate wird vorzugsweise berechnet, indem die Rußbeladung des Partikelfilters zeitabhängig erfasst wird, wobei deren zeitabhängiger Verlauf ermittelt wird. Beispielsweise ist es möglich, dass die Rußbeladung nach der Zeit abgeleitet wird, oder dass eine Differenz der Rußbeladung über ein vorherbestimmtes Zeitintervall berechnet wird. Insbesondere ist es möglich, dass die Rußbeladungsrate anhand eines Beladungsmodells berechnet wird. Alternativ ist es auch möglich, dass die Rußbeladungsrate mithilfe einer geeigneten Messeinrichtung gemessen wird. Für den Partikelfilter wird eine kritische Rußbeladung festgelegt, die für einen störungsfreien Betrieb der Brennkraftmaschine nicht überschritten werden soll. Insbesondere aus der insoweit vorzugsweise berechneten oder erfassten momentanen Rußbeladung, der Rußbeladungsrate und der vorherbestimmten, kritischen Rußbeladung ist es dann ohne weiteres möglich, die Zeit zu errechnen, die bis zum Erreichen der vorherbestimmten, kritischen Rußbeladung noch verbleibt. Dabei handelt es sich dann um das Zeitfenster, innerhalb dem - von einem momentanen Zeitpunkt aus gesehen - eine Regeneration des Partikelfilters erfolgen soll, um einen ungestörten Betrieb der Brennkraftmaschine zu gewährleisten. Bei der hier beschriebenen Art der Berechnung des Zeitfensters handelt es sich um eine zugleich einfache und betriebssichere Ausgestaltung des Verfahrens.

Es wird auch eine Ausführungsform des Verfahrens bevorzugt, die sich dadurch auszeichnet, dass die Prognose ermittelt wird, indem anhand von Ortsdaten der Brennkraftmaschine eine zu erwartende Last derselben innerhalb des Zeitfensters bestimmt wird. Dabei werden die Ortsdaten bevorzugt durch satellitengestützte Navigation ermittelt. Diese Ausführungsform des Verfahrens eignet sich für Brennkraftmaschinen, die in Einrichtungen verwendet werden, welche sich entlang von Ortskurven bewegen, insbesondere also für Brennkraftmaschinen, die in Kraftfahrzeugen verwendet werden. Bei einer bevorzugten Ausführungsform des Verfahrens werden als Ortsdaten ein momentaner Ort der Brennkraftmaschine, eine Fahrtstrecke der Brennkraftmaschine und eine momentane oder durchschnittliche Geschwindigkeit der Brennkraftmaschine, mit der diese sich entlang der Fahrtstrecke bewegt, verwendet. Es ist damit möglich, eine Zeit bis zum Erreichen eines Abschnitts der Fahrtstrecke zu bestimmen, bei der eine erhöhte Last der Brennkraftmaschine und damit eine erhöhte Abgastemperatur, die zur Regeneration des Partikelfilters im normalen Betrieb ausreicht, erreicht wird. Bei einem solchen Abschnitt der Fahrtstrecke kann es sich beispielsweise um eine Steigung handeln, welche der als Antriebseinrichtung des Kraftfahrzeugs verwendeten Brennkraftmaschine eine erhöhte Last abverlangt. Die Ermittlung der Prognose anhand von Ortsdaten ermöglicht eine sehr genaue Vorhersage der zu erwartenden Last für die Brennkraftmaschine.

Bei einer Ausführungsform des Verfahrens ist es möglich, dass die Fahrtstrecke zu Beginn des Betriebs eingegeben wird, sodass diese im Voraus bekannt ist. Alternativ ist es möglich, dass im Rahmen des Verfahrens eine Fahrtstrecken-Prognose, insbesondere auf der Grundlage der bisher zurückgelegten Strecke, durchgeführt wird, sodass quasi eine Vorhersage über die weitere Fahrtstrecke ermittelt wird. Dies ist insbesondere dann möglich, wenn die Brennkraftmaschine regelmäßig entlang einer selben oder zumindest sehr ähnlichen Fahrtstrecke bewegt wird. In diesem Fall ist es auch möglich, dass die Fahrtstrecke der Brennkraftmaschine im Rahmen des Verfahrens gelernt wird, insbesondere durch einen hierfür geeignet eingerichteten Lernalgorithmus.

Erfindungsgemäß zeichnet sich das Verfahren dadurch aus, dass die Prognose ermittelt wird, indem wenigstens ein Betriebsparameter der Brennkraftmaschine, der für einen Betriebszustand derselben charakteristisch ist, über einen Erfassungszeitraum erfasst wird. Anhand eines Verlaufs des Betriebsparameters in dem Erfassungszeitraum wird eine zu erwartende Last der Brennkraftmaschine innerhalb des Zeitfensters bestimmt. Es wird also ein Erfassungszeitraum festgelegt, über den ein Betriebsparameter der Brennkraftmaschine erfasst und ausgewertet wird, wobei auf der Grundlage der Entwicklung des Betriebsparameters in dem Erfassungszeitraum eine Vorhersage über zukünftige Betriebszustände der Brennkraftmaschine innerhalb des Zeitfensters getroffen wird. Auch auf diese Weise ist eine zu erwartende Last der Brennkraftmaschine innerhalb des Zeitfensters vorhersagbar. Dabei ist die Ermittlung der Prognose anhand des wenigstens einen Betriebsparameters besonders einfach durchführbar, insbesondere weil typischerweise ohnehin Betriebsparameter der Brennkraftmaschine erfasst und im Rahmen verschiedener Betriebsverfahren ausgewertet werden. Das Verfahren ist besonders einfach und ökonomisch durchführbar, wenn auf solche Betriebsparameter sowie gegebenenfalls deren Auswertung zurückgegriffen wird.

Das Verfahren wird bevorzugt periodisch und besonders bevorzugt permanent durchgeführt. Dabei erstreckt sich ausgehend von einem momentanen Zeitpunkt das Zeitfenster für die Regeneration des Partikelfilters in die Zukunft, während sich der Erfassungszeitraum in die Vergangenheit erstreckt. Dabei ist es grundsätzlich möglich, dass als Erfassungszeitraum der gesamte Zeitraum zwischen einem Aktivieren der Brennkraftmaschine und dem momentanen Zeitpunkt verwendet wird, sodass dieser fortlaufend zunimmt. Während eine Zuverlässigkeit der Prognose so gesteigert werden kann, erfordert dies jedoch einen relativ hohen Speicheraufwand. Kostengünstiger ist es, wenn der Erfassungszeitraum festgelegt wird, wobei dann fortlaufend Daten, die älter sind als der momentane Zeitpunkt abzüglich des Erfassungszeitraums, gelöscht werden, wobei fortlaufend neue Daten über den wenigstens einen Betriebsparameter in den insoweit als Ringspeicher verwendeten oder ausgebildeten Speicher geschrieben werden.

Die im Rahmen des Verfahrens ermittelte Prognoseaussage ist im Wesentlichen zu den Zeitpunkten relevant, zu denen eine Regeneration des Partikelfilters durch den Beladungsparameter indiziert ist. Es ist daher ökonomisch sinnvoll, das Verfahren lediglich in hierfür geeignet gewählten Zeitintervallen um diese Zeitpunkte herum durchzuführen, wobei zu anderen Zeitpunkten der mit dem Verfahren verbundene Rechen- und Speicheraufwand eingespart werden kann. Alternativ wird es allerdings bevorzugt, dass das Verfahren fortlaufend während des Betriebs der Brennkraftmaschine durchgeführt wird, wobei die Prognoseaussage nur dann für eine Entscheidung über eine durchzuführende aktive Regenerationsmaßnahme herangezogen wird, wenn eine Regeneration des Partikelfilters durch den Beladungsparameter indiziert ist.

Es wird auch eine Ausführungsform des Verfahrens bevorzugt, die sich dadurch auszeichnet, dass der Verlauf des wenigstens einen Betriebsparameters in dem Erfassungszeitraum einer Mustererkennung unterworfen wird. Diese dient insbesondere dazu, eine wiederkehrende Abfolge von Betriebszuständen der Brennkraftmaschine zu erkennen. Dies ist insbesondere dann vorteilhaft, wenn die Brennkraftmaschine unter Bedingungen betrieben wird, bei denen wiederkehrende Betriebszustände, insbesondere in Form periodischer Muster, auftreten. Dies ist beispielsweise der Fall, wenn die Brennkraftmaschine zum Antrieb eines Muldenkippers in einer Mine verwendet wird, wobei der Muldenkipper regelmäßig unbeladen die Mine herunter und beladen wieder hinauffährt. Ein anderes Beispiel ist ein durch die Brennkraftmaschine angetriebener Zug, der stets auf der gleichen Strecke eingesetzt wird. Auch der Einsatz einer Rangierlock oder eines Wasserfahrzeugs, insbesondere eines Fährschiffes im Fährbetrieb, kann solche reproduzierbare Muster aufweisen. Reproduzierbare Muster im Betrieb der Brennkraftmaschine können schließlich auch bei stationären Anwendungen, beispielsweise beim Betrieb der Brennkraftmaschine zur Stromerzeugung, insbesondere zur Spitzenlastabdeckung, auftreten. Allgemein ist eine solche Mustererkennung stets möglich bei einem typisierten gleichförmigen Betrieb der Brennkraftmaschine. Dabei hängt ein sinnvoller Erfassungszeitraum für die Mustererkennung von dem konkreten Einsatz der Brennkraftmaschine ab. Daher wird im Rahmen des Verfahrens vorzugsweise eine Vorhersage über einen sinnvollen Erfassungszeitraum getroffen, insbesondere wird der Erfassungszeitraum bevorzugt im Rahmen des Verfahrens gelernt, bevorzugt über einen hierfür geeignet eingerichteten Lernalgorithmus. Alternativ ist es auch möglich, den Erfassungszeitraum auf der Grundlage einer vorgesehenen Verwendung der Brennkraftmaschine vorzugeben. Sinnvolle Erfassungszeiträume können beispielsweise bei einem Einsatz der Brennkraftmaschine in einem Regionalzug von mindestens 0,5 Stunden bis höchsten 1 Stunde betragen. Beim Einsatz der Brennkraftmaschine in einem Langstreckenzug kann der Erfassungszeitraum durchaus länger sein, während er beim Einsatz der Brennkraftmaschine in einer Rangierlock deutlich kürzer sein kann. Maßgeblich ist hier die Periodizität der wiederkehrenden Muster im Betrieb der Brennkraftmaschine. Jedenfalls ist mithilfe der Mustererkennung eine sehr genaue Prognose zukünftiger Betriebszustände der Brennkraftmaschine insbesondere bei deren typisiertem, gleichförmigem Betrieb möglich.

Es wird eine Ausführungsform des Verfahrens bevorzugt, die sich dadurch auszeichnet, dass als Betriebsparameter eine Drehzahl, eine Last, eine Brennstoffeinspritzmenge, eine Abgastemperatur, ein Abgasmassenstrom, ein Abgasvolumenstrom, ein Messwert einer Lambdasonde, kurz auch Lambda-Wert genannt, eine Stickoxidkonzentration im Abgas, eine Stickstoffdioxidkonzentration im Abgas, ein Verhältnis einer Konzentration von Stickstoffdioxid zu einer Gesamtkonzentration von Stickoxiden im Abgas, eine Sauerstoff-Konzentration im Abgas, eine Partikelkonzentration im Abgas, ein über dem Partikelfilter abfallender Differenzdruck, und/oder ein Abgasgegendruck - insbesondere am Partikelfilter oder an einem Katalysator - erfasst wird/werden. Bei einer bevorzugten Ausführungsform des Verfahrens werden mindestens zwei der genannten Parameter, bevorzugt eine Kombination einer Mehrzahl der genannten Parameter, als Betriebsparameter herangezogen. Die genannten Parameter sind charakteristisch für einen Betriebszustand der Brennkraftmaschine und daher geeignet, Muster in einer Abfolge von Betriebszuständen zu erkennen und hieraus eine Vorhersage auf zukünftig zu erwartende Betriebszustände zu treffen. Die genannten Parameter können im Rahmen des Verfahrens mithilfe geeigneter Sensoren gemessen oder - insbesondere auf der Grundlage geeigneter Modelle - berechnet werden.

Die Aufgabe wird auch gelöst, indem ein Steuergerät mit den Merkmalen des Anspruchs 8 geschaffen wird. Dieses zeichnet sich dadurch aus, dass es eingerichtet ist zur Durchführung eines Verfahrens nach einer der zuvor beschriebenen Ausführungsformen. Dabei ergeben sich in Bezug auf das Steuergerät die Vorteile, die bereits in Zusammenhang mit dem Verfahren erläutert wurden.
Es ist möglich, dass das Steuergerät ein Gerät zur Durchführung des Verfahrens ist, in dem dieses fest in dessen elektronische Bauteilstruktur, mithin in seine Hardware, implementiert ist. Alternativ ist es möglich, dass in das Steuergerät ein Computerprogrammprodukt geladen ist, welches Anweisungen aufweist, aufgrund derer ein Verfahren nach einer der zuvor beschriebenen Ausführungsformen durchgeführt wird, wenn das Computerprogrammprodukt auf dem Steuergerät ausgeführt wird.
Vorzugsweise ist das Steuergerät ausgebildet als Motorsteuergerät einer Brennkraftmaschine (Engine Control Unit - ECU). Alternativ ist es möglich, dass das Steuergerät als separates Steuergerät zur Durchführung des Verfahrens ausgebildet ist. Dabei ist es vorzugsweise mit dem Motorsteuergerät einer Brennkraftmaschine wirkverbunden, um mit diesem im Rahmen des Verfahrens notwendige Daten auszutauschen.
Die Aufgabe wird auch gelöst, indem eine Brennkraftmaschine mit den Merkmalen des Anspruchs 9 geschaffen wird. Diese zeichnet sich aus durch ein Steuergerät nach einem der zuvor beschriebenen Ausführungsbeispiele. Damit verwirklichen sich auch in Zusammenhang mit der Brennkraftmaschine die Vorteile, die bereits in Zusammenhang mit dem Verfahren erläutert wurden.
Die Brennkraftmaschine weist ein Abgasnachbehandlungssystem mit einem Partikelfilter auf. Dieser wird im Rahmen des Verfahrens regeneriert. Vorzugsweise weist die Brennkraftmaschine in dem Abgasnachbehandlungssystem stromaufwärts des Partikelfilters einen Oxidationskatalysator auf. Die Brennkraftmaschine weist außerdem wenigstens eine Einrichtung auf, die eingerichtet ist zur Durchführung einer aktiven Regenerationsmaßnahme durch Anhebung einer Abgastemperatur, beispielsweise durch innermotorische Maßnahmen, durch sekundäre Brennstoffeinspritzung stromaufwärts eines Oxidationskatalysators, einen separaten Brenner, oder eine elektrische Heizeinrichtung zur Erhöhung der Abgastemperatur. Alle diese Maßnahmen können durch ein separates oder in das Motorsteuergerät (ECU) integriertes Steuergerät durchgeführt werden.
Bei einem bevorzugten Ausführungsbeispiel ist die Brennkraftmaschine eingerichtet zum Antrieb eines Kraftfahrzeugs, insbesondere eines Personenkraftwagens, eines Nutzfahrzeugs, eines Muldenkippers, eines Schienenfahrzeugs, oder eines Wasserfahrzeugs, insbesondere einer Fähre, oder als stationäre Brennkraftmaschine, beispielsweise zum Antrieb eines Generators zur Stromerzeugung.
Die Brennkraftmaschine ist vorzugsweise als Hubkolbenmotor ausgebildet. Bei einem bevorzugten Ausführungsbeispiel dient die Brennkraftmaschine dem Antrieb insbesondere schwerer Land- oder Wasserfahrzeuge, beispielsweise von Minenfahrzeugen, Zügen, wobei die Brennkraftmaschine in einer Lokomotive oder einem Triebwagen eingesetzt wird, oder von Schiffen. Auch ein Einsatz der Brennkraftmaschine zum Antrieb eines der Verteidigung dienenden Fahrzeugs, beispielsweise eines Panzers, ist möglich. Ein Ausführungsbeispiel der Brennkraftmaschine wird vorzugsweise auch stationär, beispielsweise zur stationären Energieversorgung im Notstrombetrieb, Dauerlastbetrieb oder Spitzenlastbetrieb eingesetzt, wobei die Brennkraftmaschine in diesem Fall vorzugsweise einen Generator antreibt. Auch eine stationäre Anwendung der Brennkraftmaschine zum Antrieb von Hilfsaggregaten, beispielsweise von Feuerlöschpumpen auf Bohrinseln, ist möglich. Weiterhin ist eine Anwendung der Brennkraftmaschine im Bereich der Förderung fossiler Roh- und insbesondere Brennstoffe, beispielswiese Öl und/oder Gas, möglich. Auch eine Verwendung der Brennkraftmaschine im industriellen Bereich oder im Konstruktionsbereich, beispielsweise in einer Konstruktions- oder Baumaschine, zum Beispiel in einem Kran oder einem Bagger, ist möglich. Die Brennkraftmaschine ist vorzugsweise als Dieselmotor oder als Benzinmotor ausgebildet.
Die Aufgabe wird schließlich auch gelöst, indem ein Kraftfahrzeug mit den Merkmalen des Anspruchs 11 geschaffen wird. Diese zeichnet sich aus durch eine Brennkraftmaschine nach einem der zuvor beschriebenen Ausführungsbeispiele. Somit verwirklichen sich in Zusammenhang mit dem Kraftfahrzeug die Vorteile, die bereits in Zusammenhang mit dem Verfahren erläutert wurden.

Ein bevorzugtes Ausführungsbeispiel des Kraftfahrzeugs ist ausgebildet als Personenkraftwagen, als Nutzfahrzeug, als Muldenkipper, als Schienenfahrzeug, oder als Wasserfahrzeug, insbesondere als Fährschiff.

Die Erfindung wird im Folgenden anhand der Zeichnung näher erläutert. Dabei zeigen:
- Figur 1: eine schematische Darstellung eines Ausführungsbeispiels eines Kraftfahrzeugs, und
- Figur 2: eine schematische Darstellung einer Ausführungsform des Verfahrens nach Art eines Flussdiagramms.

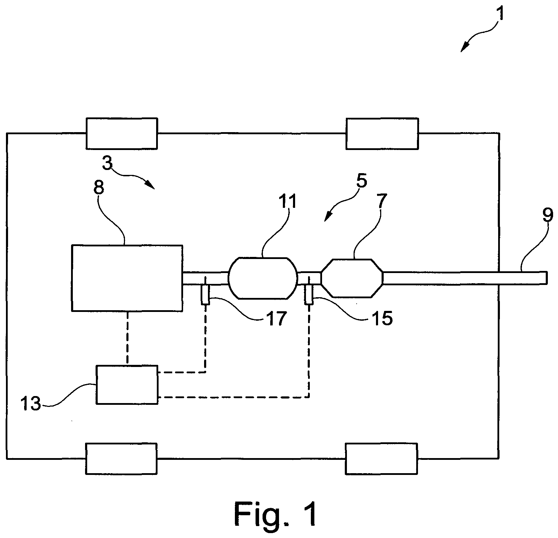

**Fig. 1** zeigt eine schematische Darstellung eines Ausführungsbeispiels eines Kraftfahrzeugs 1, welches eine Brennkraftmaschine 3 mit einem Abgasnachbehandlungssystem 5 aufweist. Das Abgasnachbehandlungssystem 5 weist einen Partikelfilter 7 und optional stromaufwärts desselben - entlang der Strömungsrichtung des Abgases in dem Abgasnachbehandlungssystem 5 von einem Brennraumbereich 8 der Brennkraftmaschine 3 bis zu einer Abgasausstoßeinrichtung 9 gesehen - einen Oxidationskatalysator 11 auf. Es ist möglich, dass das Abgasnachbehandlungssystem 5 weitere, in Figur 1 nicht dargestellte Elemente aufweist, oder dass auf einen Oxidationskatalysator 11 verzichtet wird.

Das Kraftfahrzeug 1 weist ein Steuergerät 13 auf, das eingerichtet ist zur Durchführung einer Ausführungsform des erfindungsgemäßen Verfahrens. Bevorzugt ist das Steuergerät 13 als Motorsteuergerät für die Brennkraftmaschine 3 ausgebildet und entsprechend mit dieser wirkverbunden.

Unmittelbar stromaufwärts des Partikelfilters 7 ist hier ein Drucksensor 15 angeordnet, über den ein Abgasgegendruck stromaufwärts des Partikelfilters 7 erfasst werden kann. Es ist auch möglich, dass der Drucksensor 15 als Differenzdrucksensor ausgebildet ist, mit dem ein über dem Partikelfilter 7 abfallender Differenzdruck erfassbar ist. Der Drucksensor 15 ist mit dem Steuergerät 13 wirkverbunden, sodass der von ihm erfasste Abgasgegendruck oder Differenzdruck in dem Steuergerät 13 zur Verwendung als Beladungsparameter im Rahmen des Verfahrens zur Verfügung steht. Dabei ist es insbesondere möglich, dass das Steuergerät 13 eingerichtet ist zur Berechnung einer Rußbeladung des Partikelfilters 7 aus dem von dem Drucksensor 15 übermittelten Messwert anhand eines Beladungsmodells.

Bei dem in Figur 1 dargestellten Ausführungsbeispiel ist außerdem bevorzugt unmittelbar stromabwärts des Brennraumbereichs 8, hier vorzugsweise stromaufwärts des Oxidationskatalysators 11, in dem Abgasnachbehandlungssystem 5 ein Stickoxidsensor 17 angeordnet, durch den eine Stickoxidkonzentration im Abgas erfassbar ist. Der Stickoxidsensor 17 ist mit dem Steuergerät 13 wirkverbunden, sodass seine Messwerte in dem Steuergerät 13 zur Verfügung stehen, um als Betriebsparameter im Rahmen des Verfahrens verwendet zu werden.

Die Brennkraftmaschine 3 ist vorzugsweise eingerichtet zum Antrieb des Kraftfahrzeugs 1. Dieses ist vorzugsweise als Personenkraftwagen, als Nutzfahrzeug, als Muldenkipper, als Schienenfahrzeug, oder als Wasserfahrzeug, insbesondere als Fährschiff, ausgebildet.

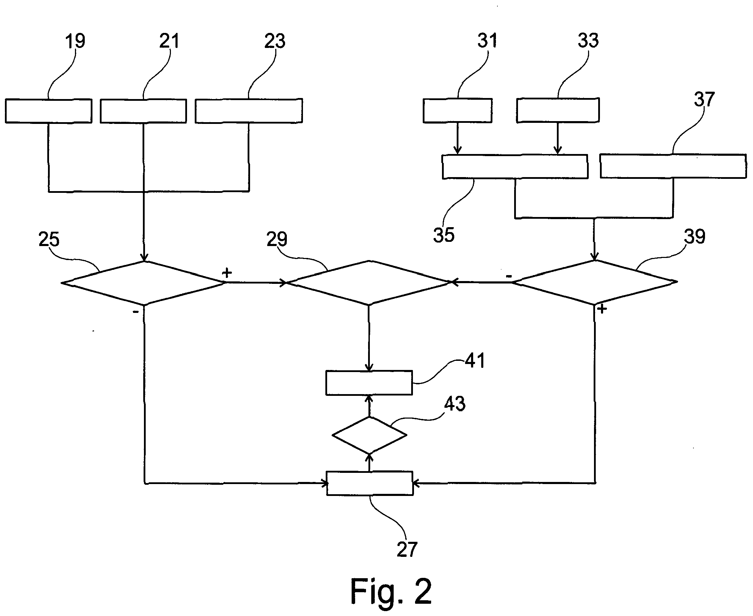

**Fig. 2** zeigt eine schematische Darstellung einer Ausführungsform des Verfahrens nach Art eines Flussdiagramms. Dabei werden bei der hier dargestellten Ausführungsform ein erster Beladungsparameter 19, ein zweiter Beladungsparameter 21, und ein dritter Beladungsparameter 23 erfasst. Bevorzugt ist der erste Beladungsparameter eine Laufzeit oder Laufleistung einer Brennkraftmaschine, beispielsweise der Brennkraftmaschine 3 gemäß Figur 1, insbesondere eine Gesamtlaufzeit oder Gesamtlaufleistung, oder eine Laufzeit oder Laufleistung, die ausgehend von einer letzten Regenerierung eines Partikelfilters, beispielsweise des Partikelfilters 7 gemäß Figur 1, gemessen ist. Der zweite Beladungsparameter 21 ist vorzugsweise ein Abgasgegendruck oder Differenzdruck am Partikelfilter, insbesondere ein von dem Drucksensor 15 gemäß Figur 1 erfasster Abgasgegendruck stromaufwärts des Partikelfilters 7 oder ein über dem Partikelfilter 7 abfallender Differenzdruck. Der dritte Beladungsparameter 23 ist vorzugsweise eine gemessene oder berechnete Rußbeladung des Partikelfilters, insbesondere eine anhand eines Beladungsmodells aus einem Messwert des Drucksensors 15 und/oder einem Betriebsparameter der Brennkraftmaschine 3 berechnete Rußbeladung.

Die drei Beladungsparameter 19, 21, 23 sind im Sinne von Auslösern oder Triggern miteinander verknüpft, wobei in einer Abfrage 25 geprüft wird, ob von wenigstens einem der Beladungsparameter 19, 21, 23 ein für diesen Beladungsparameter vorherbestimmter Grenzwert überschritten ist. Entsprechend löst stets derjenige Beladungsparameter 19, 21, 23 eine Regeneration des Partikelfilters aus, welcher zuerst den für ihn vorherbestimmten Grenzwert überschreitet. Diese Art der Auswertung verschiedener Beladungsparameter erhöht die Betriebssicherheit der Brennkraftmaschine.

Bei herkömmlichen Verfahren wird stets eine Regeneration des Partikelfilters durch Einleiten einer aktiven Regenerationsmaßnahme durchgeführt, wenn in der Abfrage 25 festgestellt wird, dass einer der Beladungsparameter 19, 21, 23 den für ihn vorherbestimmten Grenzwert überschreitet. Es wird keine aktive Regeneration des Partikelfilters durchgeführt, wenn keiner der Beladungsparameter 19, 21, 23 den für ihn vorgegebenen Grenzwert überschreitet.

Bei dem hier vorgeschlagenen Verfahren wird ebenfalls in einem Schritt 27 keine aktive Regeneration des Partikelfilters durchgeführt, wenn in der Abfrage 25 festgestellt wird, dass keiner der Beladungsparameter 19, 21, 23 den für ihn vorgegebenen Grenzwert überschreitet. Dies ist hier durch eine mit einem Minuszeichen gekennzeichnete Verzweigung schematisch angedeutet.

Im Gegensatz zu einem herkömmlichen Verfahren zur Regeneration eines Partikelfilters wird hier jedoch in einem Fall, in dem der Wert wenigstens eines der Beladungsparameter 19, 21, 23 den für ihn vorgegebenen Grenzwert überschreitet, nicht zwingend eine aktive Regenerationsmaßnahme eingeleitet. Vielmehr gelangt das Verfahren hier zu einer Abfrage 29, was durch eine mit einem Pluszeichen gekennzeichnete Verzweigung deutlich gemacht wird, in welcher eine zusätzliche Bedingung geprüft wird. Diese zusätzliche Bedingung für eine durchzuführende aktive Regenerationsmaßnahme ist, dass innerhalb eines zulässigen Zeitfensters für eine Regeneration des Partikelfilters kein Betrieb der Brennkraftmaschine vorhergesagt werden kann, bei dem eine Regeneration des Partikelfilters ohne aktive Regenerationsmaßnahme erfolgt.

Um diese Bedingung zu prüfen wird folgendermaßen vorgegangen: Es wird eine Rußbeladungsrate 31 des Partikelfilters ermittelt, die bevorzugt anhand eines Beladungsmodells berechnet oder direkt gemessen wird. Beispielsweise ist es möglich, die Rußbeladungsrate 31 anhand eines Messwerts des Drucksensors 15 gemäß Figur 1 zu ermitteln. Weiterhin wird eine kritische Rußbeladung 33 vorbestimmt, bei deren Erreichen der Partikelfilter regeneriert werden soll, um einen störungsfreien Betrieb der Brennkraftmaschine zu gewährleisten. Aus der Rußbeladungsrate 31 und der kritischen Rußbeladung 33 wird - gegebenenfalls unter Hinzunahme einer momentanen Rußbeladung des Partikelfilters - ein Zeitfenster 35 berechnet, innerhalb dessen eine Regeneration des Partikelfilters erfolgen soll.

Es wird außerdem eine Prognose 37 ermittelt, durch welche zukünftige Betriebszustände der Brennkraftmaschine 3 vorhersagbar sind.

In einer Abfrage 39 wird geprüft, ob auf der Grundlage der Prognose 37 innerhalb des Zeitfensters 35 ein Betriebszustand der Brennkraftmaschine vorhergesagt werden kann, bei dem eine Regeneration des Partikelfilters auch ohne aktive Regenerationsmaßnahme erfolgt, insbesondere weil eine Abgastemperatur der Brennkraftmaschine ohne weitere Maßnahmen hoch genug ist, um den Partikelfilter 7 zu regenerieren.

Die Prognose 37 wird vorzugsweise entweder anhand von Ortsdaten, insbesondere durch satellitengestützte Navigation, oder anhand einer Mustererkennung aufgrund von in einem Erfassungszeitraum erfassten Betriebsparametern der Brennkraftmaschine erstellt. Auf diese Weise wird ein zu erwartender Betriebszustand der Brennkraftmaschine bestimmt.

Wird in der Abfrage 39 festgestellt, dass kein entsprechender Betriebszustand für das Zeitfenster 35 vorhergesagt werden kann, entweder weil die Prognose 37 kein oder kein zuverlässiges Ergebnis liefert, oder weil die Prognose 37 eine negative Aussage zurückgibt, dass nämlich kein solcher Betriebszustand vorhergesagt wird, setzt sich das Verfahren in einer Verzweigung fort, die hier schematisch durch ein Minuszeichen gekennzeichnet ist. Wird dann in der Abfrage 29 festgestellt, dass zum einen wenigstens einer der Beladungsparameter 19, 21, 23 den für ihn vorgegebenen Grenzwert überschreitet, und dass zum anderen kein Betriebszustand vorhersagbar ist, bei dem eine Regeneration des Partikelfilters ohne aktive Regenerationsmaßnahmen erfolgt, wird in einem Schritt 41 eine aktive Regenerationsmaßnahme eingeleitet.

Wird dagegen in der Abfrage 39 festgestellt, dass innerhalb des Zeitfensters 35 ein Betriebszustand zu erwarten ist, bei dem eine Regeneration des Partikelfilters 7 auch ohne aktive Regenerationsmaßnahme erfolgt, wird das Verfahren in einer Verzweigung fortgesetzt, die hier schematisch mit einem Pluszeichen gekennzeichnet ist. In diesem Fall wird in dem Schritt 27 keine aktive Regenerationsmaßnahme durchgeführt, insbesondere wird eine eigentlich fällige aktive Regenerationsmaßnahme nicht durchgeführt oder übersprungen, obwohl diese eigentlich durch wenigstens einen der Beladungsparameter 19, 21, 23 indiziert wäre.

Vorzugsweise wird anschließend noch in einer weiteren Abfrage 43 geprüft, ob der prognostizierte Betriebszustand innerhalb des Zeitfensters 35 tatsächlich eingetreten ist und insoweit eine Regeneration des Partikelfilters 7 stattgefunden hat. Ist dies nicht der Fall, wird das Verfahren in dem Schritt 41 fortgesetzt, wobei eine aktive Regenerationsmaßnahme eingeleitet wird, um einen ungestörten Betrieb der Brennkraftmaschine 3 zu gewährleisten. Andernfalls unterbleibt - wie zuvor beschrieben - die aktive Regenationsmaßnahme. Auf diese Weise wird eine fehlerbehaftete Prognose 37 im Rahmen des Verfahrens abgefangen.

Insgesamt zeigt sich so, dass mithilfe des Verfahrens Brennstoff für eine Brennkraftmaschine eingespart werden kann, indem unnötige aktive Regenerationsmaßnahmen vermieden werden.

## Patentansprüche

1. Verfahren zur Regeneration eines Partikelfilters (7) im Betrieb einer Brennkraftmaschine (3), mit folgenden Schritten:
- Erfassen von wenigstens einem Beladungsparameter (19,21,23), der charakteristisch für eine momentane Beladung des Partikelfilters (7) ist, wobei abhängig von dem Beladungsparameter (19,21,23) wiederkehrend eine aktive Regenerationsmaßnahme durchgeführt werden kann;
- Ermitteln eines Zeitfensters (35) für eine Regeneration des Partikelfilters (7);
- Ermitteln einer Prognose (37) für einen innerhalb des Zeitfensters (35) zu erwartenden Betriebszustand der Brennkraftmaschine (3), wobei
- die aktive Regenerationsmaßnahme zu einem Zeitpunkt, zu dem sie durch den Beladungsparameter (19,21,23) indiziert ist, übersprungen wird, wenn die Prognose (37) innerhalb des Zeitfensters (35) einen Betriebszustand der Brennkraftmaschine (3) vorhersagt, bei dem eine Regeneration des Partikelfilters (7) ohne aktive Regenerationsmaßnahme erfolgt
- **dadurch gekennzeichnet, dass** die Prognose (37) ermittelt wird, indem wenigstens ein Betriebsparameter der Brennkraftmaschine (3), der für einen Betriebszustand derselben charakteristisch ist, über einen Erfassungszeitraum erfasst wird, wobei anhand eines Verlaufs des Betriebsparameters in dem Erfassungszeitraum eine zu erwartende Last der Brennkraftmaschine (3) innerhalb des Zeitfensters (35) bestimmt wird.

2. Verfahren nach Anspruch 1, **dadurch gekennzeichnet, dass** die aktive Regenerationsmaßnahme zur Regeneration des Partikelfilters (7) eingeleitet wird, wenn sie durch den Beladungsparameter (19,21,23) indiziert ist, wobei zugleich die Prognose (37) innerhalb des Zeitfensters (35) keinen Betriebszustand der Brennkraftmaschine (3) vorhersagt, bei dem eine Regeneration des Partikelfilters (7) ohne aktive Regenerationsmaßnahme erfolgt.

3. Verfahren nach einem der vorhergehenden Ansprüche, **dadurch gekennzeichnet, dass** als Beladungsparameter (19,23,23) eine Laufzeit oder eine Laufleistung der Brennkraftmaschine, ein Abgasgegendruck am Partikelfilter, ein Differenzdruck über dem Partikelfilter, und/oder eine Rußbeladung des Partikelfilters erfasst wird/werden.

4. Verfahren nach einem der vorhergehenden Ansprüche, **dadurch gekennzeichnet, dass** das Zeitfenster (35) ermittelt wird, indem eine Rußbeladungsrate (31) des Partikelfilters (7) ermittelt wird, wobei als Zeitfenster (35) die Zeit ermittelt wird, die bis zum Erreichen einer vorherbestimmten, kritischen Rußbeladung (33) bei der ermittelten Rußbeladungsrate (31) noch vergeht.

5. Verfahren nach einem der vorhergehenden Ansprüche, **dadurch gekennzeichnet, dass** die Prognose (37) ermittelt wird, indem anhand von Ortsdaten der Brennkraftmaschine (3), insbesondere durch satellitengestützte Navigation, eine zu erwartende Last der Brennkraftmaschine (3) innerhalb des Zeitfensters (35) bestimmt wird.

6. Verfahren nach einem der vorhergehenden Ansprüche , **dadurch gekennzeichnet, dass** der Verlauf des Betriebsparameters in dem Erfassungszeitraum einer Mustererkennung unterworfen wird.

7. Verfahren nach einem der vorhergehenden Ansprüche , **dadurch gekennzeichnet, dass** als Betriebsparameter eine Drehzahl, eine Last, eine Brennstoffeinspritzmenge, eine Abgastemperatur, ein Abgasmassenstrom, ein Abgasvolumenstrom, ein Messwert einer Lambdasonde, eine Stickoxidkonzentration im Abgas, eine Stickstoffdioxidkonzentration im Abgas, ein Verhältnis einer Konzentration von Stickstoffdioxid zu einer Gesamtkonzentration von Stickoxiden im Abgas, eine Sauerstoff-Konzentration im Abgas, eine Partikelkonzentration im Abgas, ein Abgasgegendruck stromaufwärts des Partikelfilters (7) und/oder ein über dem Partikelfilter (7) abfallender Differenzdruck erfasst wird/werden.

8. Steuergerät (13), eingerichtet zur Ausführung eines Verfahrens nach einem der Ansprüche 1 bis 7.

9. Brennkraftmaschine (3), **gekennzeichnet durch** ein Steuergerät nach Anspruch 8.

10. Brennkraftmaschine nach Anspruch 9, **dadurch gekennzeichnet, dass** die Brennkraftmaschine (3) eingerichtet ist zum Antrieb eines Kraftfahrzeugs (1) oder als stationäre Brennkraftmaschine (3).

11. Kraftfahrzeug (1), **gekennzeichnet durch** eine Brennkraftmaschine nach einem der Ansprüche 9 und 10.

12. Kraftfahrzeug (1) nach Anspruch 11, **dadurch gekennzeichnet, dass** das Kraftfahrzeug ein Personenkraftwagen, ein Nutzfahrzeug, ein Muldenkipper, ein Schienenfahrzeug, oder ein Wasserfahrzeug ist.

## Claims

1. Method for regenerating a particle filter (7) during the operation of an internal combustion engine (3), with following steps:
- Recording at least one loading parameter (19,21,23) that is characteristic of a current loading of the particle filter (7), wherein an active regeneration measure can be performed recurrently depending on the loading parameter (19,21,23);
- Determining a time window (35) for a regeneration of the particle filter (7);
- Determining a prediction (37) for an operating state of the internal combustion engine (3) that is to be expected within the time window (35), wherein
- the active regeneration measure is skipped at a point in time at which it is indicated by the loading parameter (19,21,23) if the prediction (37) predicts an operating state of the internal combustion engine (3) within the time window (35) in which a regeneration of the particle filter (7) will take place without an active regeneration measure,
- **characterized in that** the prediction (37) is determined by recording at least one operating parameter of the internal combustion engine (3) that is characteristic of an operating state of said engine over a recording time period, wherein a load on the internal combustion engine (3) that is to be expected within the time window (35) is determined using a profile of the operating parameter in the recording time period.

2. Method according to Claim 1, **characterized in that** the active regeneration measure for regenerating the particle filter (7) is initiated if it is indicated by the loading parameter (19,21,23), wherein at the same time the prediction (37) predicts no operating state of the internal combustion engine (3) within the time window (35) in which a regeneration of the particle filter (7) will take place without an active regeneration measure.

3. Method according to any one of the preceding claims, **characterized in that** a running time or a mileage of the internal combustion engine, an exhaust gas counter pressure at the particle filter, a pressure difference across the particle filter and/or a soot loading of the particle filter is/are recorded as (a) loading parameter(s) (19,23,23).

4. Method according to any one of the preceding claims, **characterized in that** the time window (35) is determined by determining a soot loading rate (31) of the particle filter (7), wherein the time still remaining until reaching a previously determined critical soot loading (33) at the determined soot loading rate (31) is determined as a time window (35) .

5. Method according to any one of the preceding claims, **characterized in that** the prediction (37) is determined by determining a load on the internal combustion engine (3) that is to be expected within the time window (35) using position data of the internal combustion engine (3), in particular by satellite-based navigation.

6. Method according to any one of the preceding claims, **characterized in that** the profile of the operating parameter in the recording time period is subjected to pattern recognition.

7. Method according to any one of the preceding claims, **characterized in that** a revolution rate, a load, a fuel injection quantity, an exhaust gas temperature, an exhaust gas mass flow, an exhaust gas volumetric flow, a measurement value of a lambda probe, a concentration of oxides of nitrogen in the exhaust gas, a concentration of nitrogen dioxide in the exhaust gas, a ratio of a concentration of nitrogen dioxide to a total concentration of oxides of nitrogen in the exhaust gas, an oxygen concentration in the exhaust gas, a particle concentration in the exhaust gas, an exhaust gas counter pressure upstream of the particle filter (7) and/or a pressure difference falling across the particle filter (7) is/are recorded as (an) operating parameter(s).

8. Control unit (13) that is configured to implement a method according to any one of Claims 1 to 7.

9. Internal combustion engine (3), **characterized by** a control unit according to Claim 8.

10. Internal combustion engine according to Claim 9, **characterized in that** the internal combustion engine (3) is configured for driving a motor vehicle (1) or as a static internal combustion engine (3).

11. Motor vehicle (1), **characterized by** an internal combustion engine according to any one of Claims 9 and 10.

12. Motor vehicle (1) according to Claim 11, **characterized in that** the motor vehicle is an automobile, a commercial vehicle, a dumper truck, a rail vehicle, or a watercraft.

## Revendications

1. Procédé pour la régénération d'un filtre à particules (7) pendant le fonctionnement d'un moteur à combustion interne (3), comprenant les étapes suivantes:
- détecter au moins un paramètre de charge (19, 21, 23), qui est caractéristique d'un état de charge instantané du filtre à particules (7), dans lequel on peut exécuter de façon récurrente une mesure de régénération active en fonction du paramètre de charge (19, 21, 23);
- déterminer une fenêtre de temps (35) pour une régénération du filtre à particules (7);
- déterminer un pronostic (37) pour un état de fonctionnement du moteur à combustion interne (3) à attendre à l'intérieur de la fenêtre de temps (35), dans lequel
- on peut sauter la mesure de régénération active à un instant, auquel elle est indicée par le paramètre de charge (19, 21, 23), lorsque le pronostic (37) prévoit à l'intérieur de la fenêtre de temps (35) un état de fonctionnement du moteur à combustion interne (3), dans lequel une régénération du filtre à particules (7) se produit sans mesure de régénération active,
**caractérisé en ce que** l'on détermine le pronostic (37), par le fait que l'on détecte sur une période de détection au moins un paramètre de fonctionnement du moteur à combustion interne (3), qui est caractéristique pour un état de fonctionnement de celui-ci, dans lequel on détermine à l'aide d'une évolution du paramètre de fonctionnement dans la période de détection une charge du moteur à combustion interne (3) à attendre à l'intérieur de la fenêtre de temps (35).

2. Procédé selon la revendication 1, **caractérisé en ce que** l'on introduit la mesure de régénération active pour la régénération du filtre à particules (7), lorsqu'elle est indicée par le paramètre de charge (19, 21, 23), dans lequel en même temps le pronostic (37) ne prévoit à l'intérieur de la fenêtre de temps (35) aucun état de fonctionnement du moteur à combustion interne (3), pour lequel une régénération du filtre à particules (7) se produit sans mesure de régénération active.

3. Procédé selon l'une quelconque des revendications précédentes, **caractérisé en ce que** l'on détecte comme paramètre de charge (19, 21, 23) une durée de marche ou un kilométrage du moteur à combustion interne, une contrepression des gaz d'échappement sur le filtre à particules, une pression différentielle sur le filtre à particules, et/ou une charge de suie du filtre à particules.

4. Procédé selon l'une quelconque des revendications précédentes, **caractérisé en ce que** l'on détermine la fenêtre de temps (35), par le fait que l'on détermine une vitesse de charge de suie (31) du filtre à particules (7), dans lequel on détermine comme fenêtre de temps (35) le temps qui reste encore pour atteindre une charge de suie critique prédéterminée (33) pour la vitesse de charge de suie déterminée (31).

5. Procédé selon l'une quelconque des revendications précédentes, **caractérisé en ce que** l'on détermine le pronostic (37), par le fait que l'on détermine à l'aide de données de localisation du moteur à combustion interne (3), en particulier par la navigation assistée par satellites, une charge du moteur à combustion interne (3) à attendre à l'intérieur de la fenêtre de temps (35).

6. Procédé selon l'une quelconque des revendications précédentes, **caractérisé en ce que** l'on soumet l'évolution du paramètre de fonctionnement pendant la période de détection à une reconnaissance de formes.

7. Procédé selon l'une quelconque des revendications précédentes, **caractérisé en ce que** l'on détecte comme paramètre de fonctionnement un nombre de tours, une charge, un débit d'injection de carburant, une température des gaz d'échappement, un débit massique des gaz d'échappement, un débit volumétrique des gaz d'échappement, une valeur de mesure d'une sonde lambda, une concentration en oxydes d'azote dans les gaz d'échappement, une concentration en dioxyde d'azote dans les gaz d'échappement, un rapport d'une concentration en dioxyde d'azote à une concentration totale en oxydes d'azote dans les gaz d'échappement, une concentration en oxygène dans les gaz d'échappement, une concentration en particules dans les gaz d'échappement, une contrepression des gaz d'échappement en amont du filtre à particules (7) et/ou une pression différentielle formée sur le filtre à particules (7).

8. Appareil de commande (13), conçu pour l'exécution d'un procédé selon l'une quelconque des revendications 1 à 7.

9. Moteur à combustion interne (3), **caractérisé par** un appareil de commande selon la revendication 8.

10. Moteur à combustion interne selon la revendication 9, **caractérisé en ce que** le moteur à combustion interne (3) est conçu pour l'entraînement d'un véhicule à moteur (1) ou comme moteur à combustion interne stationnaire (3).

11. Véhicule à moteur (1), **caractérisé par** un moteur à combustion interne selon une des revendications 9 et 10.

12. Véhicule à moteur (1) selon la revendication 11, **caractérisé en ce que** le véhicule à moteur est une voiture particulière, un véhicule utilitaire, un tombereau, un véhicule ferroviaire, ou un véhicule marin.
